# EUROPEAN PATENT SPECIFICATION

(11) **EP 2 183 079 B1**
(45) Date of publication and mention of the grant of the patent: **01.06.2011**
(21) Application number: 08787514.2
(22) Date of filing: 27.08.2008
(51) Int. Cl.: B25J 15/06, B65G 47/91, B66C 1/02

(54) **VACUUM GRIPPER WITH A PLURALITY OF LONGITUDINAL ISOLATING ELEMENTS**
VAKUUMGREIFER MIT MEHREREN LÄNGSISOLIERELEMENTEN
PREHENSEUR A VENTOUSE POURVU D'UNE PLURALITE D'ELEMENTS ISOLANTS LONGITUDINAUX

(30) Priority: 28.08.2007 NO 20074373
(43) Date of publication of application: 12.05.2010
(73) Proprietor: Optimove As, 3400 Lier (NO)
(72) Inventor: BREKKHUS, Norvald, N-3028 Drammen (NO)
(74) Representative: Popp, Eugen
(86) International application number: PCT/EP2008/061218
(87) International publication number: WO 2009/027431

(56) References cited:
- DE-A1- 4 444 960
- DE-U1- 20 306 885
- US-A- 5 388 879

## Description

The present invention is related to a vacuum gripper according to the preamble of claim 1.

Such a vacum gripper is known from DE-A-4 444 960.

During machine handling of objects, it is common to use different grippers to intervene in order to grasp the object to be handled. Such grippers are typically fixed to a robot, and tend to be placed along a production line. During the handling of objects with irregular shapes, typically placed on a conveyor, there is a problem that the items to be handled may have different sizes and shapes, and can be oriented in different ways so that the side facing up and needing to be intervened can vary. Typical areas in which these issues are prominent are within the food industry where, for example, round or split fish or beef have to be handled for the processing and packing. In the process the hygiene and cleaning is another key element.

To grip the objects it was previously proposed to use needles sticking into the object, various forms of fingers that interfere around the object and various grippers that use a vacuum. There are advantages and disadvantages of the different solutions.

With vacuum grippers there is a problem to provide sufficient isolation between the object to be intervened and the gripper to provide a sufficient grip.

To overcome this, document DE 44 44 960 proposed a gripper with a nozzle with resilient or flexible elements located in an area around the nozzle, to improve the seal between the nozzle and the object that needs to be intervened. Such grippers can be used to seize items with certain irregularities, but are not ideal in order to seize various shapes. There also exist solutions where a flexible bellow is used as a mouth piece to isolate between the object that needs to be intervened and the gripper. However, there is a disadvantage with the flexible bellow having a limited life expectancy and that the functions are diminished during the life time.

Thus, it is a purpose of the present invention to provide a vacuum gripper tuned to be able to grasp objects with a wider variety in terms of shape. Further, a longer life expectancy will be obtained due to a higher wear resistance. Compared to solutions using bellow and vacuum, the proposed solution has an equal or better flexibility and longer life expectancy. The gripper does not change characteristics or suction during the time of operation, have a high stability during gripping and releasing, while maintaining the flexibility and hygiene.

This and other issues related to this are resolved in whole or in part with a solution as specified in the attached claims, identifying a vacuum gripper for machine handling of objects.

The solution includes a housing where a vacuum can be applied through at least one channel and a majority of longitudinal isolating elements associated with the housing, to close gaps between the object and gripper. The isolating elements are placed side by side and define a suction opening of the housing. The longitudinal isolating elements are individually, slidably arranged in the housing so that it allows a motion of elements along the elements lengthwise between a front position, a rear position and any intermediate position.

The isolating elements can be cylindrical sticks with a circular cross section.

Other shapes may be used, for example sticks with oval cross-sections, with surfaces adapted to each other so that it forms mainly parallel surfaces between each item, or other suitable cross-sections.

The isolating elements can be made of a polymer. Alternatively, the items may be made of a metal such as stainless steel or aluminium. The items can be surface treated to give the correct behavior in connection with friction, isolation, corrosion and hygiene.

It may include drilling or milling for the isolating elements, adapted for the isolating elements to slide in between these positions. The drilling or milling surrounds the isolating elements in whole or in par. The housing can be made of a metal such as stainless steel or aluminium. The housing can be made of a combination of these materials. The housing can be surface treated to give the correct behavior in connection with the friction, isolation, corrosion and hygiene.

The isolating elements can have a normal forward position so that the items are in its front position when they are not loaded with the object.

It can further include at least one channel for the supply of a liquid for flushing of the arrangement. Flushing is particularly important in the handling of food products to ensure hygienic conditions. The flushing channel can be linked to a hose for supply of water or a suitable washing or cleaning liquid. The channel can also be provided for using compressed air to remove unwanted items or matter.

A distance between the isolating elements will be affected by the vacuum in the area delimited by the isolating elements, object to be handled and the housing. This will help the items to be drawn against each other by the pressure difference between the hollow area (cavity) as defined between the gripper and the object, and the atmosphere.

Moreover, the invention includes a method according to claim 11 for the machine handling of an object with a vacuum gripper.

The isolating elements are placed side by side and define an area of the housing. By giving a pressure that is lower than atmospheric pressure to the arrangement, and moving the gripper over the object to be handled, the low pressure draws the gripper and the objet against each other, whereby the object pushes the isolating elements into the housing at a distance defined by the object, and the gripper can then handle the object.

The steps may further include that the object touches towards a surface inside the gripper.

Brief description of the enclosed figures:
Figure 1a shows a vacuum gripper according to an embodiment of the invention, seen in perspective;
Figure 1b shows the gripper seen from the side of the object to be handled
Figure 2 is a side view of the invention, in which the internal components are shown with dotted lines;
Figure 3 is a perspective of a hollow part for the vacuum gripper;
Figure 4 is a perspective of an outer casing for the vacuum gripper;
Figure 5 is a cross-section of the outer casing shown in Figure 4;
Figure 6 shows the internal support for the vacuum gripper;
Figure 7 shows a detail of the internal support shown in Figure 6;
Figure 8 shows one isolating element for use in the vacuum gripper.

Detailed description of the application of the invention with reference to the attached figures:

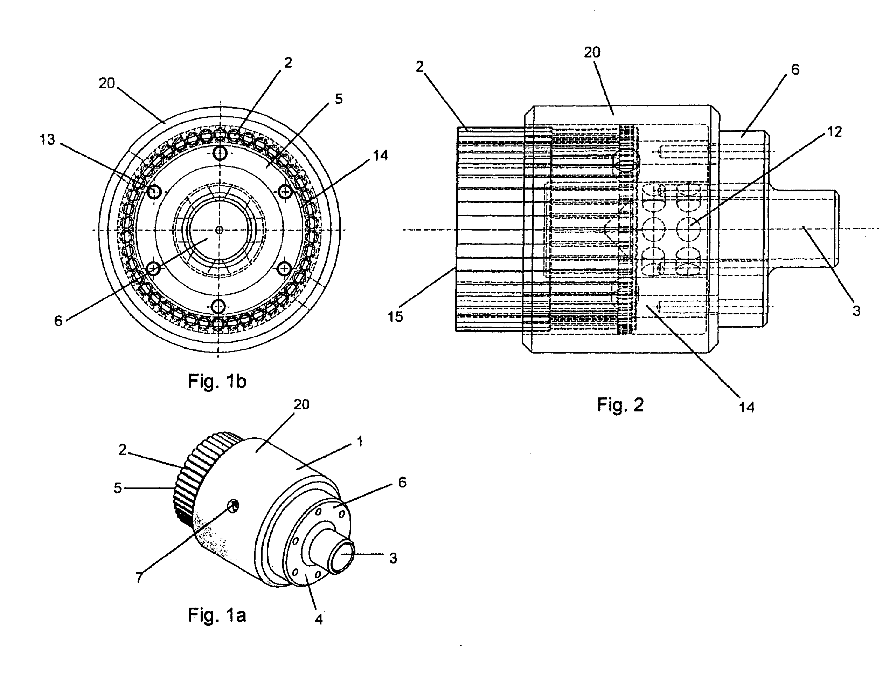

Figure 1a and 1b shows a vacuum gripper with a housing 1. The figure shows the hollow part 6 and the outer casing 20, as well as isolating elements 2. The figure also shows a hole for flushing 7 of the outer casing 20 and a suction joint 3 in the hollow part 6. The gripper includes an opening or suction part 5, which also appears from the figure.

Figure 2 shows a vacuum gripper that refers to Figure 1, The internal components and layout is shown by the dotted lines. From the figure it is shown how the hollow part 6 keeps the internal support 14 and the exterior outer casing 20 of the housing. Figure 2 shows how the internal support is turned firmly against the hollow part 6, and how a flanged part the outer casing 20 is pressed between the internal support 14 and hollow part 6.

Moreover, it shows the opening or the suction part 5, which is the part that will be brought against the object to be handled. The isolating elements 2 are shown in Figure 2 pushed out to their stops, so that all isolating elements 2 are in the same position. The isolating elements 2, however, can move independently of each other in and out of the housing, all the way toward the edge of the outer casing 20 for the housing.

Figure 2 also shows how the outer casing 20 holds the suction elements 2 to the internal support 14.

The suction joint 3 attaches to an item providing low pressure or vacuum and connects to the vacuum gripper. Vacuum or low pressure is transferred from the suction joint 3 to suction holes 12.

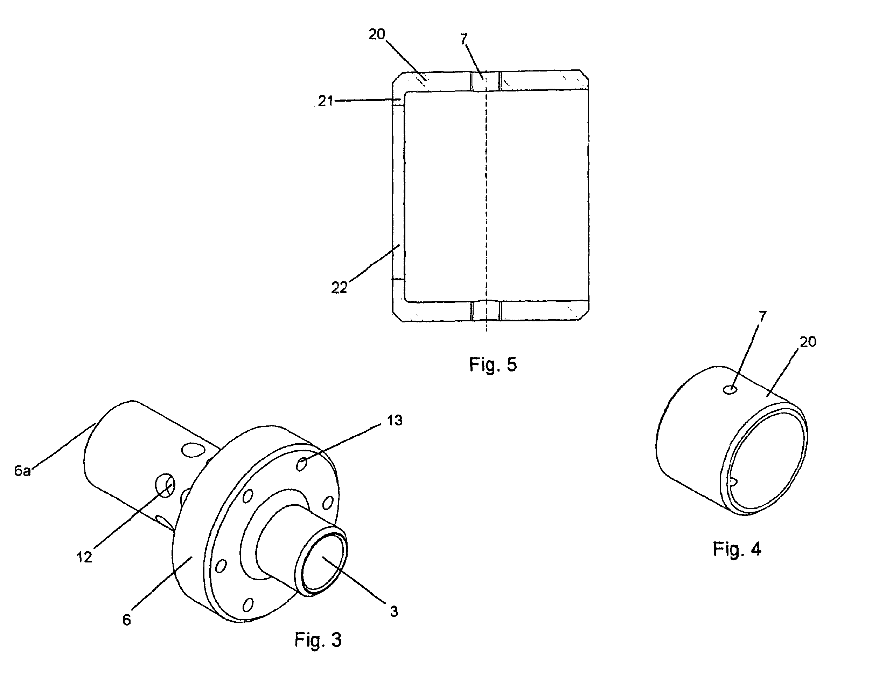

Figure 3 shows the hollow part 6 with suction joint 3 and fastening holes 13 for fixing the internal support 14 to the hollow part 6. The Suction holes 13 are interconnected with suction joint 3, so that when the air is sucked out of suction joint 3, it will also suck air out of suction holes 12.

A lower suction support surface 6a on the hollow part 6 can meet the object to be gripped, thereby avoiding unnecessary suction pressure to the object. This will prevent the gripper from transferring unnecessarily high forces to the object, resulting in possible deformation or damage to the object.

The fastening holes 13 for fixing the support is shown placed along a flange on the hollow part 6.

Figure 4 shows the outer casing 20 for the housing in perspective. The casing 20 is equipped with holes 7 for flushing of the gripper to ensure hygienic conditions.

The outer casing 20 is tuned to be squeezed between the hollow part 6 and the internal support 14, and has an internal diameter that is adapted to the internal diameter of support 14, so that the outer casing of the housing holds the isolating elements 2 to the internal support 14 when the gripper is put together.

Figure 5 shows the outer casing 20 for the housing from seen from the side, and flushing holes 7 are shown. The outer casing 20 includes a flanged part 21 that is adapted to be squeezed between the internal support 14 and the hollow part 6 when the internal support 14 is fastened to the hollow part 6.

An opening 22 of the outer casing 20 for the housing allows the anterior part of hollow part 6 to protrude into the outer casing 20.

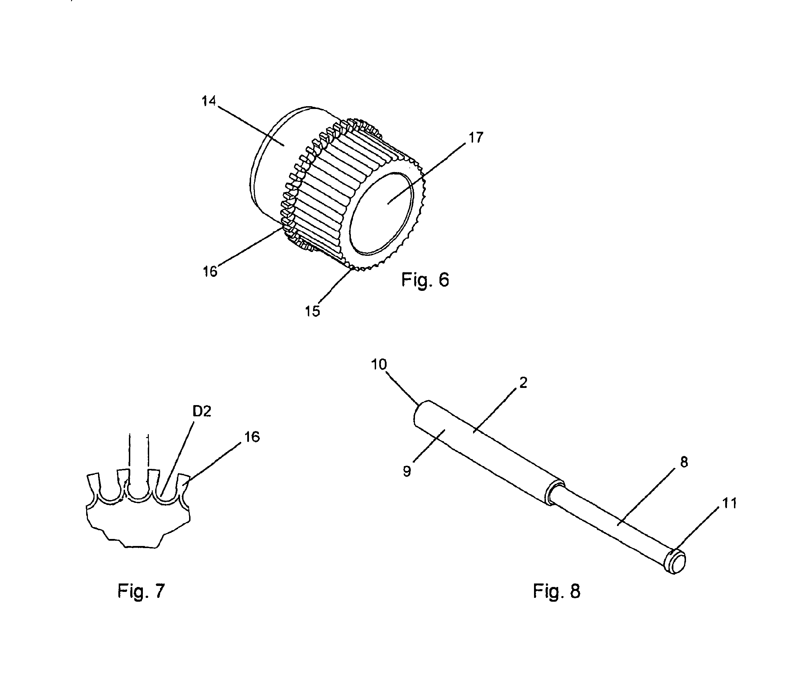

Figure 6 shows the internal support 14 in perspective. The internal support 14 includes a hole 17 for the hollow part 6 and a milled part 15 for the isolating elements 2. The isolating elements shown are cylindrical, and the milled part 15 for the isolating elements has essentially the same curvature D1 as the isolating elements 2. This is for the isolating elements 2 to be able to slide along the milled part 15 in the internal support 14. End stops 16 are placed at the end of milled part 15 for the isolating elements. The end stoppers include a part with the same curvature as D2 which is less than the elements isolating parts. This is shown in Figure 7.

Figure 8 shows an isolating element 2 in perspective, where an isolating element for different parts is more clearly shown. Isolating element 2 comprises an isolating section 9 with a first diameter D1 and a support section 8 with a second diameter D2. A support and stop head 11 is placed at the end of the support section 8.

The isolating element includes a cylindrical isolating section 9 with a first diameter D1, then going stepwise from a larger diameter to a smaller diameter ending up at the diameter of the support section 8 with a diameter D2. At the end of the guide section with a diameter D2, is a guide and stop head 11. The guide and stop head 11 can typically have the same diameter as the isolating section with a diameter D1, or be somewhat smaller.

The purpose of the guide and stop head 11 is to keep the isolating element 2 in the milled grooves 15 for the isolating elements, thus making sure that the isolating elements are not sliding out of the inner support 14, but stops when the guiding and stop head 11 meets the support and stop heads 16, shown in detail on figure 7.

Figure 8 further shows that the isolating element 2 have a lower end of the isolating section that, during the operation, will touch the item that needs to be gripped, and push the isolating element 2 into the gripper so that isolating element 2 will slide along milled grooves 15 in the internal support 14. In this way, each isolating element 2 is pushed according to what is to be gripped.

When the pressure in suction joint 3 is reduced, this low pressure is transferred to suction holes 12, which in turn will lower the pressure in the opening of the suction part 5. When an object that needs to be gripped is moved towards the opening/suction part 5, a chamber is formed between the object and the gripper. The low pressure that is transmitted from suction joint 3 at suction holes 12 will then draw the gripping element and the object against each other, and the isolating elements will be pushed into the arrangement. The object will eventually end up against the suction surface shown in Figure 3. The low pressure in the opening or the cavity will also have the effect that isolating elements 2 are drawn towards each other. This will have the effect that there is less leakage between each isolating element, which in turn will improve the effect of the vacuum.

The capacity of the compressor to suck the air out of suction joint 3 shall be sufficient for the vacuum gripper to grasp objects, even if it is a small leakage between the object and the gripper.

The vacuum gripper is intended normally to be used in a position in which the isolating elements are primarily vertical. This means that the isolating elements 2 will be held in the front position due to gravity.

The isolating elements may be held in a front position in other ways, for example, by air pressure between the housing and isolating elements, by the help of springs, by the pressure from the flushing liquid or in any other appropriate manner.

The fastening holes 13 can also be used for fixing the gripper to a robot or an actuator for machine handling of the objects to be gripped.

The isolating elements 2 can preferably be made of acid-resistant steel, and the internal support 14 may preferably be made of a suitable synthetic material or stainless steel. Other materials with low friction in relation to each other, and with suitable properties in relation to the object, can be used.

The isolating elements 2 may be made of materials with good elastic properties, for example rubber or elastomers. The use of such materials will lead to good sealing between the elements. A combination of rigid and elastic elements could be useful, for example every 2^{nd} element rigid and elastic.

Within the food industry, where the gripper is intended to be used, certain materials have properties that are important in relation to wear and hygienic conditions. It is important to use materials that are not toxic, are not corroding, are not hygroscopic and are easy to clean.

## Claims

1. A vacuum gripper for machine handling of objects, with a housing (1) where vacuum can be applied through at least one channel and a plurality of longitudinal isolating elements (2) associated with the housing (1) to close gaps between the object and gripper, as the isolating elements (2) are placed side by side and define a suction opening (5) of the housing (1) **characterised in that** :
the longitudinal isolating elements (2) are individually movable and
arranged in the housing so as to allow a longitudinal movement of the elements (2) between a front position, a withdrawn position and any intermediate positions.

2. A vacuum gripper according to claim 1, whereby the isolating elements (2) are cylindrical pins.

3. A vacuum gripper according to claim 1 or 2, whereby the isolating elements (2) are made of a polymer.

4. A vacuum gripper according to any one of claims 1 to 3, whereby the isolating elements (2) are elastic.

5. A vacuum gripper according to claim 1 or 2, whereby the isolating elements (2) are made of a stainless steel.

6. A vacuum gripper according to any of the preceding claims, whereby the housing (1) includes holes for the isolating elements (2), adapted for the elements to slide in between the front position, the withdrawn position and any intermediate positions.

7. A vacuum gripper according to any one of claims 1 to 6, whereby the isolating elements (2) have a normal forward position.

8. A vacuum gripper according to any one of claims 1 to 7, whereby the housing (1) further includes at least one channel for the supply of a liquid for flushing of the arrangement.

9. A vacuum gripper according to any one of claims 1 to 8, whereby the clearance between the isolating elements (2) is affected by the vacuum in the area limited by the isolating elements, the object to be handled and the housing.

10. A vacuum gripper according to any one of claims 1 to 9, whereby the forward movement of isolating elements (2) is provided by flushing, where the flushing pushes the pins into a forward position while cleaning the arrangement.

11. A method for machine handling of an object with a vacuum gripper according to any of the preceding claims,
the method comprising :
providing a pressure that is lower than atmospheric pressure to the arrangement;
moving the gripper over the object to be handled, whereupon the low pressure draws the gripper and the object against each other, whereby
the object pushes the isolating elements into the housing (1) at a distance defined by the object;
and handling the object.

12. The method according to claim 11, further comprising limiting the movement of the vacuum gripper by means of a surface (6a) inside the housing which can meet the object to be gripped.

## Patentansprüche

1. Vakuumgreifer zur maschinellen Handhabung von Gegenständen, mit einem Gehäuse (1), an das ein Vakuum durch mindestens einen Kanal angelegt werden kann, und mehreren Längsisolierelementen (2), die mit dem Gehäuse (1) verbunden sind, um Lücken zwischen dem Gegenstand und dem Greifer zu schließen, wenn die Isolierelemente (2) Seite an Seite angeordnet sind und eine Saugöffnung (5) des Gehäuses (1) abgrenzen,
**dadurch gekennzeichnet, dass**:
die Längsisolierelemente (2) einzeln beweglich und in dem Gehäuse angeordnet sind, um eine Längsbewegung der Elemente (2) zwischen einer vorderen Stellung, einer zurückgezogenen Stellung und beliebigen Zwischenstellungen zuzulassen.

2. Vakuumgreifer nach Anspruch 1, wobei es sich bei den Isolierelementen (2) um zylindrische Stifte handelt.

3. Vakuumgreifer nach Anspruch 1 oder 2, wobei die Isolierelemente (2) aus einem Polymer hergestellt sind.

4. Vakuumgreifer nach einem der Ansprüche 1 bis 3, wobei die Isolierelemente (2) elastisch sind.

5. Vakuumgreifer nach Anspruch 1 oder 2, wobei die Isolierelemente (2) aus rostfreiem Stahl hergestellt sind.

6. Vakuumgreifer nach einem der vorhergehenden Ansprüche, wobei das Gehäuse (1) Öffnungen für die Isolierelemente (2) umfasst, die dazu angepasst sind, dass die Isolierelemente zwischen der vorderen Stellung, der zurückgezogenen Stellung und beliebigen Zwischenstellungen gleiten können.

7. Vakuumgreifer nach einem der Ansprüche 1 bis 6, wobei die Isolierelemente (2) eine nach vorn gerichtete Grundstellung haben.

8. Vakuumgreifer nach einem der Ansprüche 1 bis 7, wobei das Gehäuse (1) darüber hinaus mindestens einen Kanal zur Zufuhr einer Flüssigkeit zum Spülen der Anordnung umfasst.

9. Vakuumgreifer nach einem der Ansprüche 1 bis 8, wobei der Zwischenraum zwischen den Isolierelementen (2) durch das Vakuum in dem Bereich beeinflusst wird, der durch die Isolierelemente, den handzuhabenden Gegenstand und das Gehäuse begrenzt ist.

10. Vakuumgreifer nach einem der Ansprüche 1 bis 9, wobei die Vorwärtsbewegung der Isolierelemente (2) durch Spülen bereitgestellt wird, wobei der Spülvorgang die Stifte in eine nach vorn gerichtete Stellung drückt und dabei die Anordnung gereinigt wird.

11. Verfahren zur maschinellen Handhabung einen Gegenstands mit einem Vakuumgreifer nach einem der vorhergehenden Ansprüche,
wobei das Verfahren umfasst:
Anlegen eines Drucks an die Anordnung, der niedriger ist als Atmosphärendruck;
Bewegen des Greifers über den handzuhabenden Gegenstand, woraufhin der niedrige Druck den Greifer und den Gegenstand aneinander zieht, wodurch der Gegenstand die Isolierelemente um einen durch den Gegenstand definierten Abstand in das Gehäuse (1) drückt; und Handhaben des Gegenstands.

12. Verfahren nach Anspruch 11, darüber hinaus umfassend, die Bewegung des Vakuumgreifers mittels einer Fläche (6a) im Inneren des Gehäuses einzuschränken, die dem zu ergreifenden Gegenstand entgegenkommen kann.

## Revendications

1. Préhenseur à ventouse pour manipuler des objets avec une machine, avec un boîtier (1) où du vide peut être appliqué par au moins un canal et une pluralité d'éléments isolants longitudinaux (2) associés au boîtier (1) pour fermer des espaces entre l'objet et le préhenseur, lorsque les éléments isolants (2) sont passés côte à côte et définissent une ouverture d'aspiration (5) du boîtier (1),
**caractérisé en ce que** :
les éléments isolants longitudinaux (2) sont individuellement mobiles et agencés dans le boîtier afin de permettre un mouvement longitudinal des éléments (2) entre une position avant, une position retirée et n'importe quelle position intermédiaire.

2. Préhenseur à ventouse selon la revendication 1, dans lequel les éléments isolants (2) sont des broches cylindriques.

3. Préhenseur à ventouse selon la revendication 1 ou 2, dans lequel les éléments isolants (2) sont réalisés à partir d'un polymère.

4. Préhenseur à ventouse selon l'une quelconque des revendications 1 à 3, dans lequel les éléments isolants (2) sont élastiques.

5. Préhenseur à ventouse selon la revendication 1 ou 2, dans lequel les éléments isolants (2) sont réalisés à partir d'un acier inoxydable.

6. Préhenseur à ventouse selon l'une quelconque des revendications précédentes, dans lequel le boîtier (1) comprend des trous pour les éléments isolants (2), adaptés pour faire coulisser les éléments entre la position avant, la position retirée et n'importe quelle position intermédiaire.

7. Préhenseur à ventouse selon l'une quelconque des revendications 1 à 6, dans lequel des éléments isolants (2) ont une position vers l'avant normale.

8. Préhenseur à ventouse selon l'une quelconque des revendications 1 à 7, dans lequel le boîtier (1) comprend en outre au moins un canal pour l'alimentation d'un liquide afin de rincer l'agencement.

9. Préhenseur à ventouse selon l'une quelconque des revendications 1 à 8, dans lequel le jeu entre les éléments isolants (2) est affecté par le vide dans la zone limitée par les éléments isolants, l'objet à manipuler et le boîtier.

10. Préhenseur à ventouse selon l'une quelconque des revendications 1 à 9, dans lequel le mouvement vers l'avant des éléments isolants (2) est fourni par le rinçage, où le rinçage pousse les broches dans une position vers l'avant tout en nettoyant l'agencement.

11. Procédé pour manipuler un objet avec une machine, avec un préhenseur à ventouse selon l'une quelconque des revendications précédentes,
le procédé comprenant les étapes consistant à :
prévoir une pression qui est inférieure à la pression atmosphérique sur l'agencement ;
déplacer le préhenseur sur l'objet à manipuler, suite à quoi la basse pression tire le préhenseur et l'objet l'un contre l'autre, moyennant quoi l'objet pousse les éléments isolants dans le boîtier (1) à une distance définie par l'objet ;
et manipuler l'objet.

12. Procédé selon la revendication 11, comprenant en outre l'étape consistant à limiter le mouvement du préhenseur à ventouse au moyen d'une surface (6a) à l'intérieur du boîtier qui peut rencontrer l'objet à saisir,
